(19) Europäisches Patentamt
European Patent Office
Office européen des brevets

(11) **EP 2 428 033 B1**

(12) **FASCICULE DE BREVET EUROPEEN**

(45) Date de publication et mention
de la délivrance du brevet:
**05.03.2014 Bulletin 2014/10**

(21) Numéro de dépôt: **10727459.9**

(22) Date de dépôt: **04.05.2010**

(51) Int Cl.:
**H04N 5/30** *(2006.01)*        **H04N 3/14** *(2006.01)*
**H04N 19/60** *(2014.01)*

(86) Numéro de dépôt international:
**PCT/FR2010/050852**

(87) Numéro de publication internationale:
**WO 2010/128245 (11.11.2010 Gazette 2010/45)**

(54) **DISPOSITIF ET PROCEDE DE COMPRESSION D'UNE IMAGE POUR CAPTEUR D'IMAGES**

EINRICHTUNG UND VERFAHREN ZUM KOMPRIMIEREN EINES BILDES FÜR EINEN BILDSENSOR

DEVICE AND METHOD FOR COMPRESSING AN IMAGE FOR AN IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.05.2009 FR 0953060**

(43) Date de publication de la demande:
**14.03.2012 Bulletin 2012/11**

(73) Titulaire: **Commissariat à l'Énergie Atomique et aux Énergies Alternatives**
**75015 Paris (FR)**

(72) Inventeurs:
• **THABUIS, Tristan**
  **F-74800 Amancy (FR)**
• **VILLARD, Patrick**
  **F-38700 La Tronche (FR)**

(74) Mandataire: **Bonnet, Michel**
**Cabinet Bonnet**
**93, Rue Réaumur - Boîte 10**
**75002 Paris (FR)**

(56) Documents cités:
• **SHOJI KAWAHITO ET AL: "A CMOS Image Sensor with Analog Two-Dimensional DCT-Based Compression Circuits for One-Chip Cameras" IEEE JOURNAL OF SOLID-STATE CIRCUITS, IEEE SERVICE CENTER, PISCATAWAY, NJ, US, vol. 32, no. 12, 1 décembre 1997 (1997-12-01), XP011060624 ISSN: 0018-9200**
• **OLYAEI A ET AL: "Mixed-signal CMOS wavelet compression imager architecture" CIRCUITS AND SYSTEMS, 2005. 48TH MIDWEST SYMPOSIUM ON CINICINNATI, OHIO AUGUST 7-10, 2005, PISCATAWAY, NJ, USA,IEEE, 7 août 2005 (2005-08-07), pages 1267-1270, XP010895375 ISBN: 978-0-7803-9197-0 cité dans la demande**

# Description

La présente invention concerne un dispositif et un procédé de compression d'une image pour capteur d'images, notamment pour capteur d'images à sortie numérique. Elle concerne également un capteur d'images comportant un tel dispositif de compression.

Dans certaines applications, telles que l'imagerie infrarouge refroidie ou l'imagerie à grande dynamique, l'optimisation conjointe de la qualité des images et de la consommation est une préoccupation de première importance.

Par exemple, pour obtenir un rapport signal sur bruit maximal avec un capteur photonique pour la détection infrarouge, il est nécessaire de faire fonctionner ce capteur dans un environnement où la température est basse et régulée, en général autour de 77 K. Par conséquent, ce type de capteur doit comporter des circuits de lecture et de traitement à faible consommation pour limiter la chaleur dissipée et le coût du système de refroidissement.

Dans un capteur photonique à sortie numérique, trois types de bruits viennent perturber le signal fourni : le bruit photonique, le bruit électronique et le bruit de quantification. Le bruit photonique, inévitable, est croissant avec l'amplitude du rayonnement détecté. Le bruit électronique est indépendant de l'amplitude du rayonnement détecté et dépend de la conception des circuits électroniques du capteur. Enfin, le bruit de quantification est indépendant de l'amplitude du rayonnement détecté mais dépend de la résolution du convertisseur analogique/numérique utilisé dans le capteur. En cherchant à minimiser le bruit électronique et le bruit de quantification pour que le bruit photonique soit le facteur limitant sur toute la dynamique souhaitée du rayonnement à détecter, de manière à garantir un rapport signal sur bruit maximal sur toute la plage de détection utile, on en vient en général à utiliser un convertisseur analogique/numérique de résolution et consommation très élevées. Il en résulte par ailleurs dans ce cas une transmission coûteuse des données numériques en sortie du convertisseur, notamment pour un capteur photonique de grande taille et de fréquence trame élevée.

Pour réduire la consommation dans les capteurs d'images à sortie numérique tout en conservant une qualité d'image acceptable, une première solution consiste à multiplier le nombre de convertisseurs analogique/numérique dans un même capteur. Cette solution part du principe vérifié que l'augmentation de la puissance consommée par un circuit de conversion analogique/numérique avec sa fréquence de fonctionnement s'accélère lorsque cette dernière devient très élevée. Ainsi, N convertisseurs fonctionnant à la fréquence F consomment moins d'énergie qu'un seul convertisseur fonctionnant à la fréquence NxF pour une résolution équivalente. Pour un capteur d'images comportant une matrice de pixels photosensibles, il est ainsi possible d'évoluer d'une structure à un seul convertisseur en bout de matrice vers une structure comportant une pluralité de convertisseurs en pieds de colonnes de la matrice, voire vers une structure comportant une pluralité de convertisseurs intégrés dans la matrice, chacun traitant un bloc de taille prédéterminée de pixels. Chaque convertisseur, par exemple à rampes multiples, peut en outre prévoir un traitement parallèle des bits de poids fort et des bits de poids faible pour réduire encore la consommation.

Une deuxième solution part du principe que, puisque le bruit photonique augmente avec l'amplitude du rayonnement détecté, le convertisseur analogique/numérique peut être conçu pour quantifier les signaux fournis par les pixels selon un pas variable, notamment fin aux faibles amplitudes et croissant avec l'amplitude du flux incident, sans pour autant impliquer de pertes visibles tant que le bruit photonique reste dominant sur toute la plage utile. Un dispositif mettant en oeuvre cette solution est par exemple décrit dans le brevet publié sous le numéro US 7,148,831. Ainsi, le rapport signal sur bruit reste optimal, mais la quantité de données numériques à transmettre en sortie du convertisseur est réduite, d'où une réduction de la consommation.

Une troisième solution consiste à réaliser une décorrélation de l'image captée par la matrice pour réduire son entropie. Là encore, le but recherché est de réduire la quantité de données numériques à transmettre en sortie du convertisseur. En outre, une décorrélation analogique réalisée avant la conversion analogique/numérique permet également de réduire la consommation par rapport à une décorrélation numérique réalisée après la conversion analogique/numérique.

On notera que les trois solutions détaillées ci-dessus ne sont pas incompatibles entre elles et peuvent être mises en oeuvre de façon combinée dans un même dispositif. Notamment, une décorrélation analogique peut être prévue en amont de la conversion analogique/numérique, y compris dans une structure comportant une pluralité de convertisseurs en pieds de colonnes de la matrice, ou une structure comportant une pluralité de convertisseurs intégrés dans la matrice, chacun traitant un bloc de taille prédéterminée de pixels. En effet, un certain nombre de modules de décorrélation analogique connus traitent les pixels de la matrice par blocs de taille prédéterminée, notamment des blocs de 2x2, 4x4 ou 8x8 pixels.

En outre, lorsqu'une décorrélation analogique est combinée à une conversion analogique/numérique, il est possible d'envisager une compression avec perte en ne convertissant pas les coefficients générés par la décorrélation lorsqu'ils sont inférieurs à un seuil prédéterminé et/ou en adaptant le pas de quantification de la conversion analogique/numérique à chaque type de coefficient. Le gain en consommation est alors encore plus important.

L'invention concerne donc plus précisément un dispositif de compression d'une image pour capteur d'images, comportant un module de décorrélation analogique d'une image pour la fourniture de coefficients basse fréquence et de coefficients haute fréquence à partir de cette image et un convertisseur analogique/numérique de coefficients.

Un tel dispositif est par exemple décrit dans le document intitulé « Mixed-Signal CMOS Wavelet Compression Imager Architecture » de A. Olyaei et al, 48th Midwest Symposium on Circuits and Systems, 2005, vol. 2, pp. 1267-1270, 7-10 août 2005. Dans ce dispositif, la matrice est divisée en blocs de $2^L$x$2^L$ pixels sur lesquels sont appliquées des transformations en ondelettes de Haar bidimensionnelles de niveau L. Cependant, les erreurs introduites par le traitement provoquent l'augmentation du bruit de quantification sur toute la dynamique de signal utile. Une perte préjudiciable est notamment particulièrement sensible dans les zones d'image à faible flux incident.

Un tel dispositif est également décrit dans l'article de Kawahito et al, intitulé « A CMOS image sensor with analog two-dimensional DCT-based compression circuits for one-chip cameras », publié dans IEEE Journal of Solid-State Circuits, vol. 32, n° 12, pp. 2030-2040, décembre 1997. Ce dispositif comporte en outre un module d'amplification analogique des coefficients basse fréquence, d'une part, et des coefficients haute fréquence, d'autre part, fournis par le module de décorrélation analogique, pour la fourniture de coefficients modifiés au convertisseur. Ce module d'amplification présente plusieurs amplificateurs.

Il peut ainsi être souhaité de prévoir un dispositif de compression qui permette de s'affranchir des problèmes et contraintes précités et/ou qui présente une amélioration en terme de qualité à consommation équivalente ou une amélioration en terme de consommation à qualité équivalente.

L'invention a donc pour objet un dispositif de compression d'une image pour capteur d'images, tel que défini dans la revendication 1.

Ainsi, en distinguant deux types de coefficients issus de la décorrélation, les coefficients basse fréquence, d'une part, et les coefficients haute fréquence, d'autre part, pour réaliser un traitement d'amplification différencié sur chacun de ces types de coefficients, en particulier pour amplifier les coefficients basse fréquence à l'aide d'un gain variable alors que les coefficients haute fréquence sont amplifiés par un gain fixe, avant de soumettre les coefficients au convertisseur analogique/numérique, on tire profit d'une propriété selon laquelle en général les coefficients basse fréquence ont une dynamique plus forte que les coefficients haute fréquence. Il en résulte la possibilité d'optimiser le traitement opéré par le convertisseur pour une qualité améliorée à consommation équivalente, ou une consommation améliorée à qualité équivalente.

De façon optionnelle, un dispositif de compression selon l'invention peut comporter l'une quelconque des caractéristiques supplémentaires des revendications 2 à 5.

L'invention a également pour objet un capteur d'images comportant une matrice de pixels photosensibles apte à capter une image et un dispositif de compression de cette image tel que défini précédemment.

L'invention a également pour objet un procédé de compression pour capteur d'images, tel que défini dans la revendication 7.

De façon optionnelle, un procédé de compression selon l'invention peut comporter l'une quelconque des caractéristiques supplémentaires des revendications 8 à 10.

L'invention sera mieux comprise à l'aide de la description qui va suivre, donnée uniquement à titre d'exemple et faite en se référant aux dessins annexés dans lesquels :

- la figure 1 représente schématiquement la structure générale d'un capteur d'images selon un mode de réalisation de l'invention,
- la figure 2 illustre les étapes successives d'un procédé de compression selon un mode de réalisation de l'invention, et
- la figure 3 représente schématiquement la structure générale d'une implémentation électronique possible d'un ensemble de compression et amplification analogiques du capteur d'images de la figure 1.

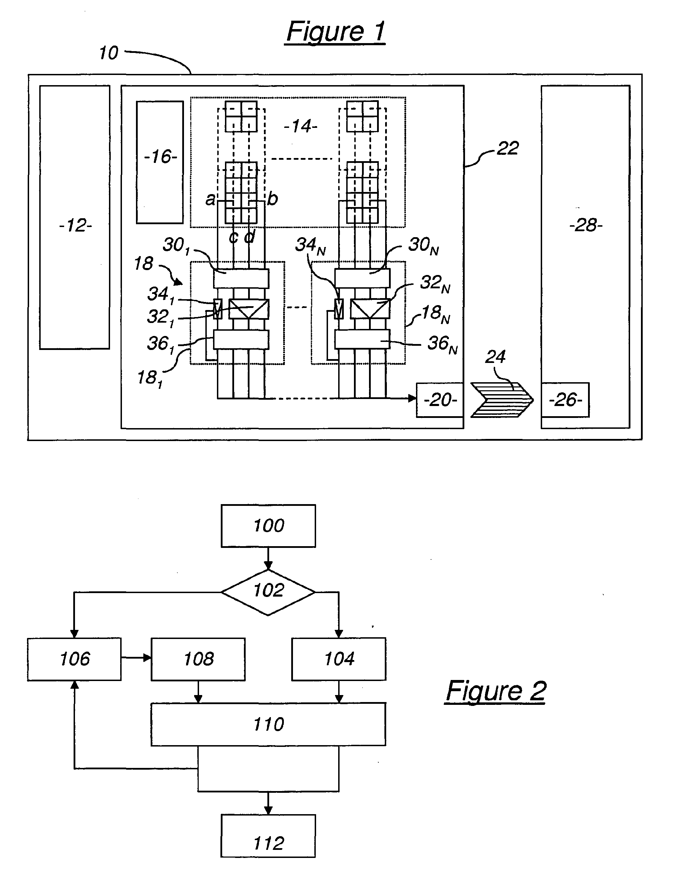

Le capteur d'images 10 schématiquement représenté sur la figure 1, par exemple un capteur réalisé en technologie CMOS, comporte un bloc optique 12 et une matrice 14 d'éléments sensibles, des photodiodes qui, associées à des moyens de lecture électrique non représentés, forment les pixels d'une image à détecter.

La matrice de pixels 14 est associée à un dispositif de séquencement 16 qui définit l'activation séquentielle des pixels et à un dispositif de compression 18 qui est notamment apte à réaliser une décorrélation analogique puis une conversion analogique/numérique des signaux fournis par les pixels de la matrice 14. Au final, le capteur d'images 10 fournit une image numérique matricielle de pixels. La matrice de pixels 14, le dispositif de séquencement 16 et le dispositif de compression 18 forment, avec une interface 20 de transmission des images numériques acquises, un circuit électronique 22 généralement appelé « circuit imageur » ou « plan focal » du capteur d'images 10.

L'interface 20 du circuit imageur 22 est en outre généralement reliée par un lien physique électronique 24 à l'interface 26 de réception d'images numériques d'un circuit coprocesseur graphique 28 qui permet d'implémenter des algorithmes d'amélioration de la qualité des images numériques acquises.

Le dispositif de séquencement 16 définit par exemple plus précisément une lecture séquentielle des valeurs des pixels d'une image, en mode d'obturation électronique ligne par ligne ou en mode d'obturation mécanique de la matrice de pixels complète, de la première ligne à la dernière ligne de l'image matricielle. Les valeurs de pixels lues sont ensuite traitées par le dispositif de compression 18 en appliquant avantageusement une décorrélation par blocs, par exemple de type DCT, transformation en ondelettes ou autre.

Pour adapter la décorrélation au mode de lecture séquentielle ligne par ligne, l'image est subdivisée en blocs disjoints. On définit la direction horizontale de l'image et des blocs qui la composent comme étant celle des lignes de l'image dans le mode de lecture séquentielle adopté ligne par ligne. On définit par conséquent la direction verticale de l'image et des blocs qui la composent comme étant celle des colonnes de l'image.

Dans l'exemple particulier mais non limitatif illustré sur la figure 1, les blocs sont carrés et constitués chacun de quatre pixels voisins, horizontalement sur deux lignes et verticalement sur deux colonnes, de sorte que le dispositif de compression 18 est distribué en pieds de colonnes de la matrice de pixels 14 à raison d'un module de compression $18_i$ toutes les deux colonnes. Si l'on note 2N le nombre pair de colonnes de la matrice 14, alors le dispositif de compression 18 comporte N modules indépendants de compression $18_1$, ..., $18_N$.

Le premier module de compression $18_1$ traite les deux premières colonnes de la matrice 14. Il comporte un module $30_1$ de décorrélation analogique des blocs de pixels des deux premières colonnes. Ce module réalise par exemple une transformation en ondelettes de Haar à un seul niveau par laquelle les quatre pixels a, b, c et d d'un bloc quelconque sont transformés en quatre coefficients A, B, C et D selon les équations suivantes :

$$A = a + b + c + d,$$

$$B = a + b - c - d,$$

$$C = a - b + c - d,$$

$$D = a - b - c + d.$$

Dans un bloc, le coefficient A réalise la moyenne des valeurs des quatre pixels a, b, c et d et représente la composante continue de la transformation de Haar à un seul niveau de ce bloc. Compte tenu des propriétés générales des images, qui sont en fait essentiellement constituées de zones homogènes différentes les unes des autres séparées par des contours locaux, cette composante continue est aussi un paramètre à forte entropie, c'est-à-dire à forte dynamique.

Les coefficients B, C et D au contraire sont représentatifs de transitions horizontales, verticales ou diagonales dans un bloc. Compte tenu des mêmes propriétés générales des images, l'écart entre des valeurs de pixels voisins est dans la plupart des cas relativement faible de sorte que ces coefficients sont des paramètres à faible valeur et faible entropie.

On peut donc considérer que, pour chaque bloc de pixels, le coefficient A est un coefficient basse fréquence à forte entropie généré par le module de décorrélation alors que les coefficients B, C et D sont des coefficients haute fréquence à faible entropie.

Le premier module de compression $18_1$ comporte aussi un module d'amplification analogique des coefficients de décorrélation fournis par le module de décorrélation $30_1$. Plus précisément, ce module d'amplification analogique comporte un premier amplificateur de coefficients haute fréquence $32_1$ (les coefficients B, C, D fournis par le module de décorrélation pour tous les blocs des deux premières colonnes) et un second amplificateur de coefficients basse fréquence $34_1$ (les coefficients A fournis par le module de décorrélation pour tous les blocs des deux premières colonnes). Le premier amplificateur $32_1$ est conçu pour appliquer un premier gain d'amplification G1 sur la base de critères différents de ceux sur la base desquels le second amplificateur $34_1$ est conçu pour appliquer un second gain d'amplification G2. En effet, selon l'invention, le module d'amplification analogique tient compte de la différence de propriétés statistiques des coefficients basse fréquence, d'une part, et des coefficients hautes fréquence, d'autre part, pour réaliser une amplification différenciée des coefficients basse et haute fréquence.

Statistiquement, pour une dynamique donnée des pixels d'une image, compte tenu des propriétés générales précitées des images, les coefficients A reproduisent cette dynamique, mais la probabilité est forte pour que la valeur du coefficient A d'un bloc soit proche de la valeur du coefficient A d'un bloc voisin. Ainsi, un critère pour appliquer un gain d'amplification aux coefficients A peut être avantageusement de le rendre variable et fonction d'une estimation a priori de ces coefficients, notamment en fonction de valeurs numériques déjà connues de coefficients A de blocs voisins. Un fonctionnement possible dans ce sens du second amplificateur $34_1$ sera détaillé en référence à la figure 2.

En revanche, statistiquement, pour une dynamique donnée des pixels d'une image, compte tenu des propriétés générales précitées des images, les coefficients B, C et D ne reproduisent pas cette dynamique. Il est même généralement observé que la valeur absolue de ces coefficients dépasse rarement le quart de la valeur maximale pouvant être prise par un pixel. En outre, lorsque la valeur de l'un de ces coefficients dépasse le quart de cette valeur maximale, il s'agit souvent d'un artéfact dont il est avantageux de ne pas tenir compte. Mais il est par contre difficile de prédire la valeur de l'un de ces coefficients en fonction de la valeur de coefficients correspondants de blocs voisins. Ainsi, un critère pour appliquer un gain d'amplification aux coefficients B, C et D peut être avantageusement de le rendre fixe et susceptible d'étaler ces coefficients sur toute la dynamique des pixels, c'est-à-dire notamment égal à 4.

Le premier module de compression $18_1$ comporte enfin un convertisseur analogique/numérique $36_1$ qui reçoit les coefficients modifiés par les amplificateurs $32_1$ et $34_1$ comme données d'entrée. Dans un mode de réalisation simple, tel que celui de la figure 1, le pas de quantification de ce convertisseur peut être constant sur toute la dynamique utile des pixels. Mais comme indiqué précédemment, le pas de quantification du convertisseur peut être variable, notamment croissant en fonction de l'amplitude du signal à numériser. On aura compris que les valeurs précitées variables ou fixes des gains des deux amplificateurs $32_1$ et $34_1$ permettent d'adapter la dynamique des coefficients de décorrélation à celle pour laquelle le convertisseur analogique/numérique $36_1$ est a priori optimal.

En sortie du convertisseur analogique/numérique $36_1$, les coefficients numériques sont transmis à l'interface 20. Dans un mode de réalisation de l'invention, celui illustré sur la figure 1, les valeurs numériques obtenues des coefficients basse fréquence sont aussi au moins partiellement transmises au second amplificateur $34_1$ pour réaliser le réglage de la valeur de son gain variable, comme cela sera détaillé en référence à la figure 2.

Les modules de compression $18_2$, ..., $18_N$ sont identiques au premier module de compression $18_1$ précédemment décrit et ne seront donc pas détaillés.

On notera que le capteur d'images 10 représenté schématiquement sur la figure 1 est par exemple un appareil photo numérique, une caméra ou un caméscope numérique, ou bien un dispositif portable de télécommunication ou de traitement de données quelconque muni d'un tel appareil photo, caméra ou caméscope intégré.

Le procédé de compression pour capteur d'images dont les étapes sont illustrées sur la figure 2 peut être mis en oeuvre par le capteur d'images 10 de la figure 1. Il comporte une première étape 100 de décorrélation analogique d'un bloc d'une image captée pour la génération de coefficients basse fréquence et de coefficients haute fréquence à partir des pixels de ce bloc. En reprenant l'exemple précédent d'un codage séquentiel par blocs de 2x2 pixels à l'aide d'une transformation de Haar d'ordre 1, le traitement d'un i-ème bloc à l'étape 100 fournit quatre coefficients de décorrélation A(i), B(i), C(i) et D(i).

Lors d'une étape suivante de discrimination 102, les coefficients basse fréquence et les coefficients haute fréquence issus de la décorrélation analogique précédente sont différenciés. Concrètement, dans l'exemple précité, le coefficient A(i) est différencié des coefficients B(i), C(i) et D(i).

Les coefficients B(i), C(i) et D(i) sont amplifiés lors d'une étape 104 par le premier amplificateur du module de compression correspondant aux colonnes traitées qui applique un gain constant G1 = 4.

Le coefficient A(i) est amplifié lors d'étapes 106 et 108 par le second amplificateur du module de compression considéré qui applique un gain variable G2(i) par exemple égal à 1, 2 ou 4.

Plus précisément, lors de l'étape 106, la valeur du gain G2(i) est déterminée en fonction de sa valeur précédente G2(i-1), appliquée au coefficient basse fréquence A(i-1) du (i-1)-ème bloc, et de la valeur numérique An(i-1), issue du convertisseur analogique/numérique, du coefficient basse fréquence amplifié G2(i-1)x A(i-1). Elle peut par ailleurs être initialisée à la valeur G2(1) = 1 pour le premier bloc de pixels traité.

Dans un mode de réalisation particulièrement simple de l'invention :

- si les deux bits de poids fort de la valeur numérique An(i-1) ont chacun la valeur 1, cela signifie que An(i-1) est saturée ou proche de la saturation ; on détermine alors la valeur G2(i) selon la relation

$$G2(i) = Max\left[1; \frac{G2(i-1)}{2}\right],$$

- si les deux bits de poids fort de la valeur numérique An(i-1) ont chacun la valeur 0, cela signifie que An(i-1) est loin de la saturation ; on détermine alors la valeur G2(i) selon la relation $G2(i) = Min[4; 2 \times G2(i-1)]$,
- sinon, la valeur G2(i) est maintenue à la valeur G2(i-1).

Cela signifie plus généralement que si la valeur numérique An(i-1) est supérieure ou égale à une première valeur prédéterminée, considérée comme trop proche de la valeur de saturation du convertisseur analogique/numérique, on réduit la valeur du gain G2 tout en restant supérieur ou égal à une valeur de gain minimale prédéterminée (ici, 1) ; si la valeur numérique An(i-1) est inférieure ou égale à une seconde valeur prédéterminée, inférieure à la première valeur, on augmente la valeur du gain G2 tout en restant inférieur ou égal à une valeur de gain maximale prédéterminée (ici, 4) ; sinon, on maintient la valeur du gain G2 à sa valeur précédente.

On évite ainsi les deux écueils suivants :

- si la valeur d'un coefficient et le gain qui lui est appliqué sont trop faibles, la quantification appliquée est alors trop grossière et la valeur numérique résultante est fortement bruitée,
- si la valeur d'un coefficient et le gain qui lui est appliqué sont trop élevés, la quantification sature et engendre des artéfacts.

Lors de l'étape 108, lorsque la valeur de gain G2(i) est déterminée, le coefficient A(i) est amplifié par le second amplificateur du module de compression correspondant aux colonnes traitées qui applique le gain G2(i).

Suite aux étapes 104 et 108, les coefficients amplifiés analogiques G2(i)xA(i), G1 xB(i), G1xC(i) et G1xD(i) sont numérisés par le convertisseur analogique/numérique du module de compression considéré au cours d'une étape 110.

Enfin, au cours d'une dernière étape 112, les coefficients amplifiés et numérisés sont transmis par le dispositif de compression 18 à l'interface 20. Le procédé reprend alors à l'étape 100 pour le traitement d'un (i+1)-ème bloc de l'image.

Le procédé précédemment décrit est mis en oeuvre par le dispositif de compression 18 implanté dans le circuit imageur 22 du capteur d'images 10. Il en résulte que le débit supporté par le lien physique électronique 24 est largement réduit.

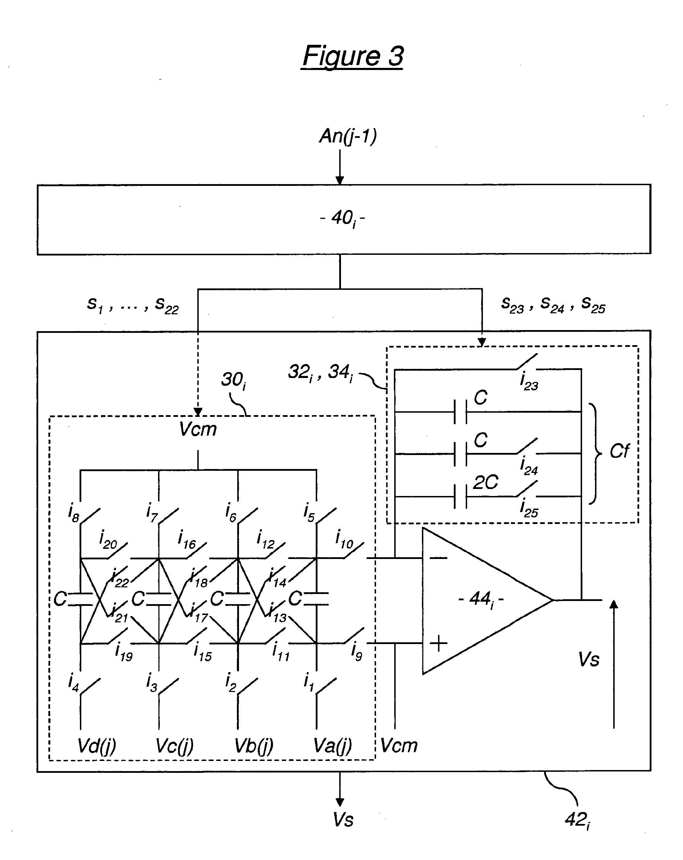

Le circuit électronique schématiquement représenté sur la figure 3 est une implémentation possible de l'ensemble constitué du module de décorrélation analogique $30_i$ et du module d'amplification analogique $32_i$, $34_i$ de l'un quelconque des modules de compression $18_i$ du capteur d'images 10 de la figure 1.

Ce circuit comporte un module numérique de commande $40_i$ et un module analogique de décorrélation et d'amplification $42_i$.

Le module analogique de décorrélation et d'amplification $42_i$ comprend un montage en amplification de tension utilisant un amplificateur opérationnel $44_i$. Ce montage présente un premier circuit de quatre condensateurs de capacités C identiques disposés en parallèle entre une tension de mode commun réglable Vcm et quatre tensions respectives Va(j), Vb(j), Vc(j) et Vd(j) dépendant directement de quatre valeurs de pixels a, b, c et d d'un j-ème.bloc de pixels à traiter. La borne de chaque condensateur raccordable à la tension de mode commun est également raccordable à l'entrée inverseuse de l'amplificateur opérationnel $44_i$. L'autre borne de chaque condensateur raccordable à sa tension respective Va(j), Vb(j), Vc(j) ou Vd(j) est également raccordable à l'entrée non inverseuse de l'amplificateur opérationnel $44_i$, cette dernière étant elle-même raccordée à la tension de mode commun Vcm. Enfin, les condensateurs sont raccordés entre eux, à la tension de mode commun, aux tensions respectives Va(j), Vb(j), Vc(j) et Vd(j) et aux entrées inverseuse et non inverseuse via un ensemble d'interrupteurs $i_1$, ..., $i_{22}$ commandés par le module numérique de commande $40_i$. Cet ensemble d'interrupteurs permet notamment de configurer le premier circuit pour que la tension différentielle d'entrée de l'amplificateur opérationnel soit proportionnelle sélectivement à l'un des quatre coefficients de décorrélation attendus A(j), B(j), C(j) et D(j) pour le j-ème bloc de pixels. Le premier circuit remplit ainsi la fonction de décorrélation analogique identifiée par la référence $30_i$.

Le montage en amplification de tension illustré sur la figure 3 présente aussi un second circuit de rétroaction composé de trois condensateurs de capacités respectives C , C et 2C et d'un court-circuit disposés en parallèle entre la sortie de l'amplificateur opérationnel $44_i$ et son entrée inverseuse. Un interrupteur $i_{23}$ est disposé dans le court-circuit, un interrupteur $i_{24}$ dans la branche comportant l'un des deux condensateurs de capacité C et un interrupteur $i_{25}$ dans la branche comportant le condensateur de capacité 2C. En jouant sur l'ouverture ou la fermeture des interrupteurs $i_{24}$ et $i_{25}$, on peut régler sélectivement la capacité équivalente Cf du second circuit de rétroaction entre les valeurs souhaitées de C, 2C et 4C. Les interrupteurs $i_{23}$, $i_{24}$ et $i_{25}$ sont commandés par le module numérique de commande $40_i$. Le second circuit de rétroaction remplit ainsi la fonction d'amplification analogique différenciée identifiée par les références $32_i$ et $34_i$. Plus précisément, compte tenu du mode de réalisation détaillé en référence à la figure 2, dans lequel le gain G1 est fixé à 4 et le gain G2 varie entre les trois valeurs 1, 2 et 4, un gain de 4 est obtenu lorsque la capacité équivalente Cf est établie à C (interrupteurs $i_{24}$ et $i_{25}$ ouverts), un gain de 2 est obtenu lorsque la capacité équivalente Cf est établie à 2C (interrupteur $i_{24}$ fermé et $i_{25}$ ouvert) et un gain de 1 est obtenu lorsque la capacité équivalente Cf est établie à 4C (interrupteurs $i_{24}$ et $i_{25}$ fermés).

Le module numérique de commande $40_i$ est conçu pour commander les différentes phases de fonctionnement du module analogique de décorrélation et d'amplification $42_i$ à l'aide de signaux $s_1$, ..., $s_{25}$ de commande respective des interrupteurs $i_1$, ..., $i_{25}$ et en fonction de la valeur numérique An(j-1), issue du convertisseur analogique/numérique $36_i$, du coefficient basse fréquence amplifié du (j-1)-ème bloc de pixels.

Pour le calcul et l'amplification des coefficients haute fréquence B(j), C(j) et D(j), lors d'une première phase d'initialisation, la tension de mode commun Vcm est établie à une valeur moyenne dans la dynamique des tensions applicables en entrée de l'amplificateur opérationnel $44_i$ parce que ces coefficients haute fréquence peuvent prendre des valeurs positives ou négatives. Par exemple, pour une dynamique de 1,4 V à 3 V, Vcm est fixée à 2,2 V. Les interrupteurs $i_1$ à $i_8$ sont fermés et les interrupteurs $i_9$ à $i_{22}$ sont ouverts. Ainsi, les quatre condensateurs du premier circuit se chargent différemment en fonction des valeurs Va(j), Vb(j), Vc(j) et Vd(j) : le condensateur relié à la tension Va(j) accumule une charge C[Va(j) - Vcm], celui relié à la tension Vb(j) accumule une charge C[Vb(j) - Vcm], celui relié à la tension Vc(j) accumule une charge C[Vc(j) - Vcm] et celui relié à la tension Vd(j) accumule une charge C[Vd(j) - Vcm]. L'interrupteur $i_{23}$ est fermé et les interrupteurs $i_{24}$ et $i_{25}$ sont ouverts de sorte que la capacité Cf = C du circuit de rétroaction ne stocke pas de charge.

Puis, lors d'une seconde phase de commutation des capacités, on ouvre les interrupteurs $i_1$ à $i_8$ et l'interrupteur $i_{23}$ pour éviter les courts-circuits. On ferme les interrupteurs $i_9$ et $i_{10}$ pour raccorder le premier circuit à l'entrée différentielle de l'amplificateur opérationnel $44_i$ et, selon le coefficient haute fréquence que l'on souhaite calculer et amplifier :

-      on ferme les interrupteurs $i_{11}$, $i_{12}$, $i_{17}$, $i_{18}$, $i_{19}$ et $i_{20}$

pour le coefficient B(j),
- on ferme les interrupteurs $i_{13}$, $i_{14}$, $i_{17}$, $i_{18}$, $i_{21}$ et $i_{22}$ pour le coefficient C(j),
- on ferme les interrupteurs $i_{13}$, $i_{14}$, $i_{15}$, $i_{16}$, $i_{21}$ et $i_{22}$ pour le coefficient D(j).

Pour le calcul et l'amplification du coefficient basse fréquence A(j), lors de la première phase d'initialisation, la tension de mode commun Vcm est établie à une valeur minimale dans la dynamique des tensions applicables en entrée de l'amplificateur opérationnel $44_i$ parce que ce coefficient basse fréquence ne peut prendre que des valeurs positives. Par exemple, pour une dynamique de 1,4 V à 3 V, Vcm est fixée à 1,4 V. Les interrupteurs $i_1$ à $i_8$ sont fermés et les interrupteurs $i_9$ à $i_{22}$ sont ouverts. Ainsi, les quatre condensateurs du premier circuit se chargent différemment en fonction des valeurs Va(j), Vb(j), Vc(j) et Vd(j) : le condensateur relié à la tension Va(j) accumule une charge C[Va(j) - Vcm], celui relié à la tension Vb(j) accumule une charge C[Vb(j) - Vcm], celui relié à la tension Vc(j) accumule une charge C[Vc(j) - Vcm] et celui relié à la tension Vd(j) accumule une charge C[Vd(j) - Vcm]. L'interrupteur $i_{23}$ est fermé et les interrupteurs $i_{24}$ et $i_{25}$ sont positionnés par le module numérique $40_i$ en fonction de la valeur An(j-1) de sorte que la capacité Cf = C, 2C ou 4C souhaitée du circuit de rétroaction ne stocke pas de charge.

Puis, lors de la seconde phase de commutation des capacités, on ouvre les interrupteurs $i_1$ à $i_8$ et l'interrupteur $i_{23}$ pour éviter les courts-circuits. On ferme les interrupteurs $i_9$ et $i_{10}$ pour raccorder le premier circuit à l'entrée différentielle de l'amplificateur opérationnel $44_i$ et on ferme les interrupteurs $i_{11}$, $i_{12}$, $i_{15}$, $i_{16}$, $i_{19}$ et $i_{20}$ pour le calcul et l'amplification du coefficient A(j).

Il apparaît clairement qu'un capteur d'images tel que celui présenté précédemment est apte à optimiser le traitement réalisé par ses modules de conversion analogique/numérique, disposés en pieds de colonnes de la matrice de pixels et en aval d'une décorrélation analogique, en amplifiant différemment au préalable les coefficients basse fréquence et haute fréquence à quantifier issus de la décorrélation.

Notamment, la dynamique des coefficients haute fréquence étant limitée, quelle que soit la direction considérée dans l'image, en général à moins d'un quart de la dynamique des coefficients basse fréquence (en imagerie infrarouge par exemple), il est avantageux de fixer un gain élevé, par exemple 4, spécifiquement pour ces coefficients haute fréquence : cela revient à réduire le pas de quantification de la conversion analogique/numérique. Ainsi, contrairement à bon nombre de procédés et dispositifs existants, l'accent est mis sur la restitution des détails de l'image : les pixels voisins présentant de faibles écarts au sein d'une image sont mieux discriminés. Pour un gain de 4, le bruit équivalent en puissance est 16 fois plus faible. Sinon, à qualité d'image souhaitée équivalente, exprimée en PSNR (de l'Anglais « Peak Signal to Noise Ratio ») par exemple, il est possible avec un tel gain de gagner 2 bits sur la taille des coefficients numériques en sortie de conversion analogique/numérique. On peut donc réduire la résolution des convertisseurs utilisés et leur coût à qualité constante. On réduit aussi la consommation du traitement et du transfert des coefficients.

Les coefficients basse fréquence étant au contraire à dynamique élevée mais sujets à des variations importantes dans une même image, il est astucieux de rendre le gain de leur amplification variable en fonction d'une estimation a priori de leur plage d'appartenance, telle que celle qui a été présentée précédemment. Le rapport signal sur bruit s'en trouve optimisé. En outre, la méthode proposée est telle que les variations du gain d'amplification des coefficients basse fréquence peuvent être simplement retrouvées a posteriori en reproduisant la même méthode au décodage.

On notera aussi que l'invention n'est pas limitée au mode de réalisation décrit ci-dessus.

En effet, l'invention a été illustrée par un exemple mettant en oeuvre une compression analogique particulièrement simple par ondelettes de Haar à un seul niveau portant sur des blocs de 2x2 pixels, mais elle est généralisable à toute compression analogique par décorrélation, fournissant des coefficients parmi lesquels il est possible de distinguer des coefficients basse fréquence, d'une part, et des coefficients haute fréquence, d'autre part. Par conséquent, le critère utilisé pour discriminer les coefficients basse et haute fréquence est à adapter en fonction de la compression utilisée. En général cependant, il est souvent possible de considérer qu'une compression par blocs portant sur des blocs de NxN pixels génère un coefficient basse fréquence et $N^2$-1 coefficients haute fréquence par bloc.

L'invention a également été illustrée avec une conversion analogique/numérique réalisée en pieds de colonnes de la matrice de pixels d'un capteur d'images, mais il apparaîtra simplement à l'homme de l'art qu'elle est réalisable y compris lorsqu'un seul convertisseur est prévu en sortie de la matrice de pixels, ou lorsqu'au contraire des convertisseurs sont prévus dans la matrice de pixels, à raison par exemple d'un convertisseur par bloc de pixels traité.

Par ailleurs, dans le mode de réalisation avantageusement simple décrit précédemment, les seconds moyens d'amplification (i.e. les seconds amplificateurs) $34_1$, ..., $34_N$ sont conçus pour déterminer, pour chaque coefficient basse fréquence à amplifier, la valeur du second gain variable en fonction de la valeur numérique, issue du convertisseur, d'un seul coefficient basse fréquence précédemment amplifié, cette valeur numérique étant utilisée comme valeur prédictive. Mais cette valeur prédictive pourrait aussi résulter de plusieurs valeurs numériques de plusieurs coefficients basse fréquence précédemment amplifiés, notamment des coefficients basse fréquence de blocs voisins et pas nécessairement situés sur une même colonne : le voisinage d'un bloc peut en effet être défini de façon assez libre. Dans ce cas, la valeur prédictive peut être obtenue par un calcul de moyenne, notamment une moyenne pondérée, des valeurs numériques considérées.

Enfin, à plusieurs reprises il a été fait mention de capteurs à infrarouge, mais l'invention n'est pas limitée à la nature des rayonnements captés par le dispositif qui la met en oeuvre. En outre, puisqu'elle s'applique à des capteurs d'images, elle s'applique aussi de la même manière à des capteurs vidéo.

**Revendications**

1. Dispositif (18) de compression d'une image pour capteur d'images (10), comportant :

   - un module ($30_1$, ..., $30_N$) de décorrélation analogique d'une image pour la fourniture de coefficients basse fréquence et de coefficients haute fréquence à partir de cette image,
   - un module ($32_1$, ..., $32_N$, $34_1$, ..., $34_N$) d'amplification analogique des coefficients basse fréquence, d'une part, et des coefficients haute fréquence, d'autre part, fournis par le module de décorrélation analogique ($30_1$, ..., $30_N$), pour la fourniture de coefficients modifiés,
   - et un convertisseur analogique/numérique ($36_1$, ..., $36_N$) des coefficients modifiés,

   **caractérisé en ce que** le module d'amplification analogique ($32_1$, ..., $32_N$, $34_1$, ..., $34_N$) comporte :

   - des premiers moyens d'amplification ($32_1$, ..., $32_N$) conçus pour appliquer un premier gain fixe prédéterminé aux coefficients haute fréquence, et
   - des seconds moyens d'amplification ($34_1$, ..., $34_N$) conçus pour appliquer un second gain variable aux coefficients basse fréquence et pour déterminer, pour chaque coefficient basse fréquence à amplifier, la valeur du second gain variable en fonction d'une estimation a priori de l'amplitude de ce coefficient basse fréquence.

2. Dispositif de compression selon la revendication 1, dans lequel les seconds moyens d'amplification ($34_1$, ..., $34_N$) sont conçus pour déterminer, pour chaque coefficient basse fréquence à amplifier, la valeur du second gain variable en fonction d'au moins une valeur numérique, issue du convertisseur analogique/numérique ($36_1$, ..., $36_N$), d'au moins un coefficient basse fréquence précédemment amplifié.

3. Dispositif de compression selon la revendication 1 ou 2, dans lequel, l'image étant constituée de blocs de pixels disjoints (14) et le module de décorrélation analogique ($30_1$, ..., $30_N$) étant conçu pour appliquer à chaque bloc une transformation par décomposition dans une base de fonctions discrètes bidimensionnelles prédéterminée, l'ensemble constitué des coefficients basse fréquence comporte le coefficient de composante continue de chaque bloc et l'ensemble constitué des coefficients haute fréquence comporte les autres coefficients générés par le module de décorrélation ($30_1$, ..., $30_N$).

4. Dispositif de compression selon la revendication 3, dans lequel l'image est une matrice de pixels photosensibles (14) constituée de blocs de 2X2 pixels et la transformation est une transformation de Haar à deux dimensions et à un seul niveau réalisée par des montages ($42_i$) en capacités commutées (C) disposés en pieds de colonnes de cette matrice de pixels.

5. Dispositif de compression selon l'une quelconque des revendications 1 à 4, dans lequel le module de décorrélation analogique est conçu pour la fourniture de coefficients basse fréquence réalisant une moyenne de valeurs de pixels.

6. Capteur d'images (10) comportant une matrice de pixels photosensibles (14) apte à capter une image et un dispositif de compression (18) de cette image selon l'une quelconque des revendications 1 à 5.

7. Procédé de compression pour capteur d'images (10), comprenant :

   - une étape (100) de décorrélation analogique d'une image captée pour la génération de coefficients basse fréquence et de coefficients haute fréquence à partir de cette image,
   - une étape (104, 106, 108) d'amplification analogique des coefficients basse fréquence, d'une part, et des coefficients haute fréquence, d'autre part, pour la fourniture de coefficients modifiés, et
   - une étape (110) de conversion analogique/numérique des coefficients modifiés,

   **caractérisé en ce que** l'étape d'amplification analogique (104, 106, 108) comporte :

   - l'application (104) d'un premier gain fixe prédéterminé aux coefficients haute fréquence, et
   - l'application (108) d'un second gain variable aux coefficients basse fréquence et la détermination (106), pour chaque coefficient basse fréquence à amplifier, de la valeur du second gain variable en fonction d'une estimation a priori de l'amplitude de ce coefficient basse fréquence.

8. Procédé de compression selon la revendication 7, dans lequel la valeur du second gain variable est déterminée (106) de la façon suivante :

- si la valeur numérique, issue du convertisseur analogique/numérique ($36_1$, ..., 36N), d'un coefficient basse fréquence précédemment amplifié prédéterminé est supérieure à une première valeur, la valeur du second gain variable est fixée au maximum entre une valeur de seuil inférieur prédéterminée et la moitié de la valeur du second gain variable appliquée audit coefficient basse fréquence précédemment amplifié,

- si la valeur numérique, issue du convertisseur analogique/numérique ($36_1$, ..., $36_N$), du coefficient basse fréquence précédemment amplifié est inférieure à une seconde valeur inférieure à la première valeur, la valeur du second gain variable est fixée au minimum entre une valeur de seuil supérieur prédéterminée et le double de la valeur du second gain variable appliquée audit coefficient basse fréquence précédemment amplifié,

- sinon la valeur du second gain variable est fixée à la valeur du second gain variable appliquée audit coefficient basse fréquence précédemment amplifié.

**9.** Procédé de compression selon la revendication 8, dans lequel le premier gain fixe est égal à 4 et la valeur du second gain variable appliquée à chaque coefficient basse fréquence est déterminée de la façon suivante :

- si les deux premiers bits de poids fort de la valeur binaire, issue du convertisseur analogique/numérique ($36_1$, ..., $36_N$), d'un coefficient basse fréquence précédemment amplifié prédéterminé sont égaux à 1, la valeur du second gain variable est fixée au maximum entre la valeur 1 et la moitié de la valeur du second gain variable appliquée audit coefficient basse fréquence précédemment amplifié,

- si les deux premiers bits de poids fort de la valeur binaire, issue du convertisseur analogique/numérique ($36_1$, ..., $36_N$), du coefficient basse fréquence précédemment amplifié sont égaux à 0, la valeur du second gain variable est fixée au minimum entre la valeur 4 et le double de la valeur du second gain variable appliquée audit coefficient basse fréquence précédemment amplifié,

- sinon la valeur du second gain variable est fixée à la valeur du second gain variable appliquée audit coefficient basse fréquence précédemment amplifié.

**10.** Procédé de compression selon l'une quelconque des revendications 7 à 9, dans lequel l'étape (100) de décorrélation analogique comporte la génération de coefficients basse fréquence réalisant une moyenne de valeurs de pixels.

**Patentansprüche**

**1.** Einrichtung (18) zum Komprimieren eines Bildes für einen Bildsensor (10), die Folgendes umfasst:

- ein Modul ($30_1$, ..., $30_N$) zur analogen Dekorrelation eines Bildes zur Lieferung von Niederfrequenzkoeffizienten und Hochfrequenzkoeffizienten ausgehend von diesem Bild,
- ein Modul ($32_1$, ..., $32_N$, $34_1$, ..., $34_N$) zur analogen Verstärkung der Niederfrequenzkoeffizienten einerseits und der Hochfrequenzkoeffizienten andererseits, die durch das Modul zur analogen Dekorrelation ($30_1$, ..., $30_N$) geliefert werden, zur Lieferung von geänderten Koeffizienten,
- und einen Analog-Digital-Wandler ($36_1$, ..., $36_N$) für die geänderten Koeffizienten,

**dadurch gekennzeichnet, dass** das Modul zur analogen Verstärkung ($32_1$, ..., $32_N$, $34_1$, ..., $34_N$) Folgendes umfasst:

- erste Verstärkungsmittel ($32_1$, ..., $32_N$), die für das Anwenden eines vorbestimmten festen ersten Verstärkungsgrads auf die Hochfrequenzkoeffizienten ausgelegt sind, und
- zweite Verstärkungsmittel ($34_1$, ..., $34_N$), die für das Anwenden eines variablen zweiten Verstärkungsgrads auf die Niederfrequenzkoeffizienten und zum Bestimmen des Werts des variablen zweiten Verstärkungsgrads für jeden zu verstärkenden Niederfrequenzkoeffizienten in Abhängigkeit von einer A-Priori-Schätzung der Amplitude dieses Niederfrequenzkoeffizienten ausgelegt sind.

**2.** Einrichtung zum Komprimieren nach Anspruch 1, wobei die zweiten Verstärkungsmittel ($34_1$, ..., $34_N$) ausgelegt sind, für jeden zu verstärkenden Niederfrequenzkoeffizienten den Wert des variablen zweiten Verstärkungsgrads in Abhängigkeit von mindestens einem Digitalwert zu bestimmen, der von dem Analog-Digital-Wandler ($36_1$, ..., $36_N$) von mindestens einem vorhergehend verstärkten Niederfrequenzkoeffizienten stammt.

**3.** Einrichtung zum Komprimieren nach Anspruch 1 oder 2, wobei, da das Bild aus getrennten Pixelblökken (14) gebildet ist und das Modul zur analogen Dekorrelation ($30_1$, ..., $30_N$) ausgelegt ist, auf jeden Block eine Transformation durch Zerlegung in eine vorbestimmte Basis zweidimensionaler diskreter Funktionen anzuwenden, die Menge, die aus den Niederfrequenzkoeffizienten besteht, den Gleichstromkomponentenkoeffizienten von jedem Block umfasst, und die Menge, die aus den Hochfrequenzkoeffizienten besteht, die anderen Koeffizienten umfasst, die durch das Modul zur Dekorrelation ($30_1$, ..., $30_N$) erzeugt werden.

4. Einrichtung zum Komprimieren nach Anspruch 3, wobei das Bild eine Matrix lichtempfindlicher Pixel (14) ist, die aus Blöcken von 2X2 Pixeln besteht, und die Transformation eine Haar-Transformation mit zwei Dimensionen und mit einem einzigen Pegel ist, die durch Schaltungen ($42_i$) mit geschalteten Kapazitäten (C) ausgeführt ist, die an Spaltenfüßen dieser Pixelmatrix angeordnet sind.

5. Einrichtung zum Komprimieren nach einem der Ansprüche 1 bis 4, wobei das Modul zur analogen Dekorrelation zum Liefern von Niederfrequenzkoeffizienten ausgelegt ist, die einen Mittelwert von Pixelwerten bilden.

6. Bildsensor (10), der eine Matrix lichtempfindlicher Pixel (14), die in der Lage sind, ein Bild aufzunehmen, und eine Einrichtung zum Komprimieren (18) dieses Bildes nach einem der Ansprüche 1 bis 5 umfasst.

7. Verfahren zum Komprimieren für einen Bildsensor (10), das Folgendes umfasst:

   - einen Schritt (100) zum analogen Dekorrelieren eines aufgenommenen Bildes zum Erzeugen von Niederfrequenzkoeffizienten und Hochfrequenzkoeffizienten ausgehend von diesem Bild,
   - einen Schritt (104, 106, 108) zum analogen Verstärken der Niederfrequenzkoeffizienten einerseits und der Hochfrequenzkoeffizienten andererseits zum Liefern von geänderten Koeffizienten, und
   - einen Schritt (110) zum Analog-Digital-Wandeln der geänderten Koeffizienten,

   **dadurch gekennzeichnet, dass** der Schritt zum analogen Verstärken (104, 106, 108) Folgendes umfasst:

   - das Anwenden (104) eines vorbestimmten festen ersten Verstärkungsgrads auf die Hochfrequenzkoeffizienten und
   - das Anwenden (108) eines variablen zweiten Verstärkungsgrads auf die Niederfrequenzkoeffizienten und, für jeden zu verstärkenden Niederfrequenzkoeffizienten, das Bestimmen (106) des Werts des variablen zweiten Verstärkungsgrads in Abhängigkeit von einer A-Priori-Schätzung der Amplitude dieses Niederfrequenzkoeffizienten.

8. Verfahren zum Komprimieren nach Anspruch 7, wobei der Wert des variablen zweiten Verstärkungsgrads auf die folgende Weise bestimmt wird (106):

   - Wenn der Digitalwert, der von dem Analog-Digital-Wandler ($36_1$, ..., $36_N$) eines vorbestimmten vorhergehend verstärkten Niederfrequenzkoeffizienten stammt, größer als ein erster Wert ist, wird der Wert des variablen zweiten Verstärkungsgrads auf das Maximum zwischen einem vorbestimmten unteren Schwellenwert und der Hälfte des Werts des variablen zweiten Verstärkungsgrads festgelegt, der auf den vorhergehend verstärkten Niederfrequenzkoeffizienten angewandt wird,
   - wenn der Digitalwert, der von dem Analog-Digital-Wandler ($36_1$, ..., $36_N$) des vorhergehend verstärkten Niederfrequenzkoeffizienten stammt, kleiner als ein zweiter Wert ist, der kleiner als der erste Wert ist, wird der Wert des variablen zweiten Verstärkungsgrads auf das Minimum zwischen einem vorbestimmten oberen Schwellenwert und dem Doppelten des Werts des variablen zweiten Verstärkungsgrads festgelegt, der auf den vorhergehend verstärkten Niederfrequenzkoeffizienten angewandt wird,
   - ansonsten wird der Wert des variablen zweiten Verstärkungsgrads auf den Wert des variablen zweiten Verstärkungsgrads festgelegt, der auf den vorhergehend verstärkten Niederfrequenzkoeffizienten angewandt wird.

9. Verfahren zum Komprimieren nach Anspruch 8, wobei der feste erste Verstärkungsgrad gleich 4 ist und der Wert des variablen zweiten Verstärkungsgrads, der auf jeden Niederfrequenzkoeffizienten angewandt wird, auf die folgende Weise bestimmt wird:

   - Wenn die ersten zwei höchstwertigen Bits des Binärwerts, der von dem Analog-Digital-Wandler ($36_1$, ..., $36_N$) eines vorbestimmten vorhergehend verstärkten Niederfrequenzkoeffizienten stammt, gleich 1 sind, wird der Wert des variablen zweiten Verstärkungsgrads auf das Maximum zwischen dem Wert 1 und der Hälfte des Werts des variablen zweiten Verstärkungsgrads eingestellt, der auf den vorhergehend verstärkten Niederfrequenzkoeffizienten angewandt wird,
   - wenn die ersten zwei höchstwertigen Bits des Binärwerts, der von dem Analog-Digital-Wandler ($36_1$, ..., $36_N$) des vorhergehend verstärkten Niederfrequenzkoeffizienten stammt, gleich 0 sind, wird der Wert des variablen zweiten Verstärkungsgrads auf das Minimum zwischen dem Wert 4 und dem Doppelten des Werts des variablen zweiten Verstärkungsgrads eingestellt, der auf den vorhergehend verstärkten Niederfrequenzkoeffizienten angewandt wird,
- ansonsten wird der Wert des variablen zweiten Verstärkungsgrads auf den Wert des variablen zweiten Verstärkungsgrads festgelegt, der auf den vorhergehend verstärkten Niederfrequenzkoeffizienten angewandt wird.

10. Verfahren zum Komprimieren nach einem der Ansprüche 7 bis 9, wobei der Schritt (100) des analogen Dekorrelierens das Erzeugen von Niederfrequenzkoeffizienten umfasst, die einen Mittelwert von Pixelwerten bilden.

**Claims**

1. A device (18) for compressing an image for an image sensor (10), comprising:

    - a module ($30_1$, ..., $30_N$) for the analogue decorrelation of an image for providing low-frequency coefficients and high-frequency coefficients from said image,
    - a module ($32_1$, ..., $32_N$, $34_1$, ..., $34_N$) for an analogue amplification of the low-frequency coefficients, on the one hand, and of the high-frequency coefficients, on the other hand, provided by the analogue decorrelation module ($30_1$, ..., $30_N$), in order to provide modified coefficients, and
    - an analogue/digital coefficient converter ($36_1$, ..., $36_N$) for converting said modified coefficients,

    characterised in that the analogue amplification module ($32_1$, ..., $32_N$, $34_1$, ..., $34_N$) comprises:

    - first amplification means ($32_1$, ..., $32_N$) designed to apply a first predetermined fixed gain to the high-frequency coefficients, and
    - second amplification means ($34_1$, ..., $34_N$) designed to apply a second variable gain to the low-frequency coefficients and to determine, for each low-frequency coefficient to be amplified, the value of the second variable gain according to an a priori estimation of the magnitude of this low-frequency coefficient.

2. A compression device according to claim 1, wherein the second amplification means ($34_1$, ..., $34_N$) are designed to determine, for each low-frequency coefficient to be amplified, the value of the second variable gain according to at least one numerical value, originating from the analogue/digital converter ($36_1$, ..., $36_N$), of at least one low-frequency coefficient previously amplified.

3. A compression device according to claim 1 or 2, wherein, the image being comprised from separate blocks of pixels (14) and the analogue decorrelation module ($30_1$, ..., $30_N$) being designed to transform each block by decomposition into a predetermined two-dimensional base of discrete functions, the set constituted from the low-frequency coefficients comprises the continuous component coefficient of each block and the set constituted from the high-frequency coefficients comprises the other coefficients generated by the decorrelation module ($30_1$, ..., $30_N$).

4. A compression device according to claim 3, wherein the image is an array of photosensitive pixels (14) comprised from blocks of 2x2 pixels and the transform is a two-dimensional Haar transform at a single level performed by switched capacitance (C) assemblies ($42_i$) positioned at the bases of the columns of this pixel array.

5. A compression device according to any one of claims 1 to 4, wherein the analogue decorrelation module is designed to provide low-frequency coefficients that produce an average value of pixels.

6. An image sensor (10) comprising an array of photosensitive pixels (14) capable of capturing an image and a compression device (18) for this image according to any one of claims 1 to 5.

7. A compression method for an image sensor (10), comprising:

    - a step (100) involving the analogue decorrelation of an image captured for generating low-frequency coefficients and high-frequency coefficients from said image,
    - a step (104, 106, 108) involving an analogue amplification of the low-frequency coefficients, on the one hand, and of the high-frequency coefficients, on the other hand, to provide modified coefficients, and
    - a step (110) involving the analogue/digital conversion of said modified coefficients,

    characterised in that the step (104, 106, 108) involving an analogue amplification comprises:

    - applying (104) a first predetermined fixed gain to the high-frequency coefficients, and
    - applying (108) a second variable gain to the low-frequency coefficients and determining (106), for each low-frequency coefficient to be amplified, the value of the second variable gain according to an a priori estimation of the magnitude of this low-frequency coefficient.

8. A compression method according to claim 7, wherein the value of the second variable gain is determined (106) in the following manner:

- if the numerical value, originating from the analogue/digital converter ($36_1$, ..., $36_N$), of a predetermined low-frequency coefficient previously amplified is higher than a first value, the value of the second variable gain is fixed at the maximum between a predetermined lower limit value and half of the value of the second variable gain applied to said low-frequency coefficient previously amplified,

- if the numerical value, originating from the analogue/digital converter ($36_1$, ..., $36_N$), of the low-frequency coefficient previously amplified is lower than a second value lower than the first value, the value of the second variable gain is fixed at the minimum between a predetermined upper limit value and double the value of the second variable gain applied to said low-frequency coefficient previously amplified,

- otherwise, the value of the second variable gain is fixed at the value of the second variable gain applied to said low-frequency coefficient previously amplified.

9. A compression method according to claim 8, wherein the first fixed gain is equal to 4 and the value of the second variable gain applied to each low-frequency coefficient is determined in the following manner:

- if the first two most significant bits of the binary value, originating from the analogue/digital converter ($36_1$, ..., $36_N$), of a predetermined low-frequency coefficient previously amplified are equal to 1, the value of the second variable gain is fixed at the maximum between the value 1 and half of the value of the second variable gain applied to said low-frequency coefficient previously amplified,

- if the first two most significant bits of the binary value, originating from the analogue/digital converter ($36_1$, ..., $36_N$), of the low-frequency coefficient previously amplified are equal to 0, the value of the second variable gain is fixed at the minimum between the value 4 and double the value of the second variable gain applied to said low-frequency coefficient previously amplified,

- otherwise, the value of the second variable gain is fixed at the value of the second variable gain applied to said low-frequency coefficient previously amplified.

10. A compression method according to any one of claims 7 to 9, wherein the analogue decorrelation step (100) includes providing low-frequency coefficients that produce an average value of pixels.

## Figure 1

## Figure 2

## Figure 3

**EP 2 428 033 B1**

## RÉFÉRENCES CITÉES DANS LA DESCRIPTION

**Documents brevets cités dans la description**

- US 7148831 B

**Littérature non-brevet citée dans la description**

- **A. OLYAEI et al.** Mixed-Signal CMOS Wavelet Compression Imager Architecture. *48th Midwest Symposium on Circuits and Systems,* 07 Août 2005, vol. 2, 1267-1270

- **KAWAHITO et al.** A CMOS image sensor with analog two-dimensional DCT-based compression circuits for one-chip cameras. *IEEE Journal of Solid-State Circuits,* Décembre 1997, vol. 32 (12), 2030-2040